# FASCICULE DE BREVET EUROPEEN

(11) **EP 3 029 599 B1**
(45) Date de publication et mention de la délivrance du brevet: **18.11.2020**
(21) Numéro de dépôt: 15196133.1
(22) Date de dépôt: 24.11.2015
(51) Int. Cl.: G06F 21/88, G08B 13/14

(54) **PROCÉDÉ DE DÉTECTION D'UNE DÉCONNEXION DU CONNECTEUR PRINCIPAL D'UN TERMINAL DE PAIEMENT ÉLECTRONIQUE, PRODUIT PROGRAMME D'ORDINATEUR, MOYEN DE STOCKAGE ET TERMINAL DE PAIEMENT CORRESPONDANTS**
VERFAHREN ZUR DETEKTION EINER TRENNUNG DES HAUPTANSCHLUSSES EINES ELEKTRONISCHEN ZAHLUNGSTERMINALS, ENTSPRECHENDES COMPUTERPROGRAMMPRODUKT, ENTSPRECHENDES SPEICHERMITTEL UND ENTSPRECHENDES ZAHLUNGSTERMINAL
METHOD FOR DETECTING A DISCONNECTION OF THE MAIN CONNECTOR OF AN ELECTRONIC PAYMENT TERMINAL, CORRESPONDING COMPUTER PROGRAM PRODUCT, STORAGE MEANS AND PAYMENT TERMINAL

(30) Priorité: 01.12.2014 FR 1461732
(43) Date de publication de la demande: 08.06.2016
(73) Titulaire: Ingenico Group, 75015 Paris (FR)
(72) Inventeur: MAYER, Laurent, 95800 COURDIMANCHE (FR); CHOWDHARY, Ferhaj, 95280 JOUY LE MOUTIER (FR)
(74) Mandataire: Vidon Brevets & Stratégie

(56) Documents cités:
- EP-A1- 2 770 601
- US-A- 6 026 492
- US-A- 6 067 014
- US-A- 6 111 504
- US-A1- 2012 280 810
- Anonymous: "Null modem - Wikipedia, the free encyclopedia", , 31 October 2014 (2014-10-31), XP055609428, Retrieved from the Internet: URL:https://web.archive.org/web/2014103109 0306/https://en.wikipedia.org/wiki/Null_mo dem [retrieved on 2019-07-29]

## Description

### 1. DOMAINE DE L'INVENTION

L'invention se rapporte au domaine des terminaux de paiement électroniques, et plus particulièrement à la sécurisation des terminaux de paiement électroniques.

Plus précisément, l'invention concerne une technique de protection contre la fraude et le piratage des terminaux de paiement électroniques.

### 2. ARRIÈRE-PLAN TECHNOLOGIQUE

Les terminaux de paiement électroniques, aussi appelés TPE, font l'objet de nombreuses tentatives d'attaques ou de vols. En effet, de par la nature des informations qu'il contient et de par la sensibilité des données qu'il traite, le terminal de paiement est un objet qui possède une grande valeur pour des personnes malveillantes.

Un certain type de fraude en particulier tend à prendre de l'ampleur : il s'agit de substituer un terminal de paiement authentique par un terminal de paiement frauduleux. Le terminal de paiement authentique est volé dans un commerce et immédiatement remplacé par un terminal de paiement qui présente une apparence de validité, mais qui en réalité a été modifié, par exemple pour lire et copier les données des cartes bancaires des clients, de façon à pouvoir effectuer des transactions frauduleuses avec des données clients préalablement lues.

Un autre type de fraude consiste à voler le terminal de paiement authentique et à le pirater (tant sur le plan logiciel que matériel), puis à remettre le terminal piraté à sa place de façon à pouvoir effectuer des transactions frauduleuses.

Le commerçant non avisé peut aisément être dupé et ne pas se rendre compte de la substitution ou du piratage de son terminal avant plusieurs jours.

Les terminaux de paiement filaires, par exemple reliés à une base, sont certes plus difficiles à voler que les terminaux de paiement mobiles, mais restent tout de même sujets à de nombreuses tentatives de vol ou de substitution. Ces terminaux sont connectés à un câble de communication par l'intermédiaire d'un connecteur principal. Un tel connecteur principal comprend généralement au moins une ligne d'alimentation électrique et au moins une ligne de communication de données. Aucun anti-vol efficace n'étant proposé actuellement, il reste relativement aisé, pour une personne malveillante, de réaliser un retrait du connecteur pour s'emparer du terminal de paiement à des fins de piratage. La présence de cadenas ou autres antivols matériels nécessite du matériel supplémentaire, ce qui n'est pas optimal, et ceci n'est pas toujours dissuasif.

Une manière pour détecter qu'un terminal de paiement authentique a été substitué par un terminal de paiement frauduleux ou a été piraté, consiste à réaliser une pesée quotidienne du terminal de paiement. Si le poids mesuré au moment de la pesée est différent du poids d'origine du terminal, cela signifie que le terminal a été substitué par un terminal frauduleux ou qu'il a subi des modifications à des fins de piratage. Le commerçant peut ainsi être alerté de la supercherie.

Toutefois, cette technique ne permet pas d'éviter le piratage du terminal de paiement, en ce sens qu'elle permet seulement de détecter l'acte frauduleux et non de l'empêcher. Elle n'est donc pas très dissuasive. "Null modem - Wikipedia, the free encyclopedia", , 31 octobre 2014, XP055609428, décrit un exemple de détection de rupture d'une boucle.

Il serait donc particulièrement intéressant de pouvoir proposer une solution pour se protéger effacement contre la fraude et le piratage de terminaux de paiement électroniques.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant de lutter plus efficacement contre la fraude et le piratage d'un terminal de paiement électronique.

Au moins un mode de réalisation de l'invention a également pour objectif de fournir une telle technique permettant détecter un retrait frauduleux d'un terminal de paiement électronique.

Un autre objectif d'au moins un mode de réalisation de l'invention est de fournir une telle technique qui soit simple à mettre en œuvre et peu coûteuse.

### 4. EXPOSÉ DE L'INVENTION

Dans un mode de réalisation particulier de l'invention, il est proposé un procédé de détection d'une déconnexion d'un connecteur principal d'un terminal de paiement électronique tel que défini par la revendication 1.

Ainsi, l'invention repose sur une approche nouvelle et inventive de lutte contre la fraude de terminaux de paiement électroniques, qui permet de limiter les possibilités de détournement d'usage du terminal par les fraudeurs. En effet, en cas de détection d'une rupture dans la boucle de contrôle de connexion (signifiant une déconnexion du connecteur principal), le terminal bascule dans un état bloqué, empêchant la réutilisation de ses principales fonctionnalités, et évitant ainsi toute manipulation ultérieure frauduleuse.

L'invention repose donc sur la mise en œuvre d'un système de contrôle en boucle fermée entre l'unité centrale de contrôle du terminal et le connecteur principal, pour s'assurer que le connecteur principal n'a pas été déconnecté du terminal.

Selon un aspect particulier de l'invention, ladite étape de détection d'une rupture de boucle comprend :
- une étape d'émission d'un signal de test vers le connecteur principal ;
- une étape de détection d'un signal de retour de boucle ;
ladite étape de détection d'une rupture dans une boucle de contrôle de connexion étant mise en œuvre en cas de détection négative du signal de retour de boucle.

Si un signal de retour de boucle est détecté, cela signifie que le connecteur principal est connecté au terminal ; la boucle de contrôle de connexion est fermée. Si aucun signal de retour de boucle n'est détecté, cale signifie que la boucle de contrôle de connexion est ouverte (absence de lien entre l'entité centrale de contrôle et le connecteur principal) et donc que le terminal n'est plus connecté à son connecteur principal.

Le terminal est donc configuré par défaut de sorte que si une rupture dans la boucle de contrôle est détectée, autrement dit si une déconnexion du connecteur principal est détectée sans autorisation préalable, un tel événement est considéré comme un acte de fraude. Ainsi l'invention permet de limiter les possibilités de nuisance des fraudeurs, en considérant la détection d'une déconnexion comme une intrusion frauduleuse. A noter par ailleurs que l'étape de détection précitée peut s'effectuer de manière continue ou de manière périodique.

Si l'on souhaite procéder à une déconnexion du connecteur principal, par exemple pour une opération de maintenance du terminal, il convient de prévoir une étape préalable consistant à désactiver le procédé de détection de déconnexion précitée, afin d'éviter le blocage non souhaité du terminal. Cet aspect est abordé en détail plus loin dans la description en relation avec le paragraphe description détaillé d'un mode de réalisation particulier de l'invention.

Selon une caractéristique particulière, le procédé comprend lorsque ledit terminal se trouve dans l'état bloqué, une étape de transmission, à au moins un serveur distant, d'un message informant qu'une déconnexion du connecteur principal dudit terminal a été détectée.

Un tel message permet d'alerter le serveur distant d'un retrait frauduleux du terminal. Par serveur distant, on entend un système de gestion à distance d'un parc de terminaux (ou TMS en anglais pour « Terminal Management System ») ou une passerelle de gestion de paiement à distance (comme la passerelle Axis par exemple).

On pourrait prévoir également une étape de génération d'une alarme, au moyen d'une connexion GSM par exemple, vers un poste donné pour informer l'utilisateur du terminal d'une tentative de vol.

Selon une caractéristique particulière, le procédé comprend, en cas de détection positive d'une rupture, une étape de diffusion d'un message informant qu'une déconnexion du connecteur principal dudit terminal a été détectée.

Un tel message permet de prévenir l'utilisateur qu'un retrait considéré comme frauduleux vient d'être effectué. Cette étape de diffusion peut s'effectuer sur l'écran d'affichage du terminal, ou sur un écran d'affichage distant du terminal appartenant à l'utilisateur à des fins de contrôle et de surveillance à distance de son terminal (la transmission du message s'effectuant à l'aide d'une communication sans-fil GSM par exemple).

Selon une caractéristique particulière, le procédé comprend, lorsque ledit terminal se trouve dans l'état bloqué, une étape de désactivation des fonctionnalités dudit terminal, lesdites fonctionnalités appartenant au groupe comprenant :
- lecture d'une carte électronique de paiement ;
- mémorisation de données ;
- établissement d'une communication avec au moins un serveur distant;
- établissement d'une transaction ;
- saisie à l'aide d'un pavé numérique du terminal;
- restriction des messages affichés sur un écran d'affichage du terminal.

Ces fonctionnalités ainsi désactivées, on limite ainsi des possibilités d'usage ultérieur potentiellement frauduleux du terminal. On pourrait également prévoir dans ce cas d'envoyer un message de fausse alerte au serveur distant.

Selon une caractéristique particulièrement avantageuse, l'étape de détection d'une rupture de boucle de contrôle de connexion est effectuée :
- lorsque ledit terminal est dans un état de fonctionnement actif, ledit terminal étant alimenté en énergie par le connecteur principal, ou
- lorsque ledit terminal est dans un état de fonctionnement inactif, ledit terminal étant alimenté en énergie par une source d'alimentation interne comprise dans ledit terminal.

Ainsi, que le terminal soit actif ou inactif, celui-ci est toujours capable de détecter une déconnexion du connecteur principal, ce qui est particulièrement avantageux notamment de nuit où les terminaux sont généralement inactifs. En d'autres termes, la détection d'une rupture dans la boucle de contrôle de connexion se fait même si le terminal n'est pas alimenté en énergie électrique.

Selon une caractéristique particulièrement avantageuse, le procédé comprend en outre, en cas de détection positive d'une rupture, une étape de détermination d'une durée de rupture dans la boucle de contrôle de connexion et une étape de vérification que ladite durée de rupture est inférieure à une durée prédéterminée.

Ainsi, en cas de vérification positive, on considère qu'il s'agit d'une déconnexion involontaire du connecteur, l'utilisateur ayant retiré le connecteur du terminal, puis se rendant compte que le terminal allait se bloquer, décide de reconnecter rapidement le connecteur principal afin d'éviter de bloquer le terminal. Cette caractéristique est particulièrement astucieuse puisqu'elle évite ainsi de devoir à mettre en œuvre tout le processus de déblocage sécurisé qui est nécessaire pour débloquer le terminal, dans le cas il s'agirait seulement d'une mauvaise manipulation.

Selon une caractéristique particulière, le procédé comprend en outre, lorsque ledit terminal se trouve dans l'état bloqué, une étape de configuration dudit terminal dans un état débloqué, sur détection d'au moins l'un des événements de déblocage suivants :
- introduction via ledit terminal d'un code secret de déblocage prédéterminé (prouvant que ledit terminal a été déconnecté par erreur du connecteur principal) ;
- introduction via ledit terminal d'au moins une carte électronique de déblocage, chacune associée à un code secret de déblocage ;
- requête de déblocage envoyée à distance audit terminal depuis un serveur distant.

Ainsi, sur détection d'un des évènements précités, il est possible de réactiver les fonctionnalités désactivées du terminal. Le processus de déblocage peut se faire en local via le terminal ou bien à distance via un serveur distant, par exemple au moyen d'une connexion sans-fil GSM.

L'invention repose sur un déblocage multi-niveau, ce permet d'offrir aux propriétaires de terminaux le choix du niveau de sécurité et de déblocage de leurs terminaux.

L'étape de configuration peut être réalisée après avoir reconnecté le connecteur principal au terminal, autrement dit après détecté que la boucle de contrôle de connexion est à nouveau fermée.

Dans un autre mode de réalisation de l'invention, il est proposé un produit programme d'ordinateur qui comprend des instructions de code de programme pour la mise en œuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en œuvre le procédé précité (dans l'un quelconque de ses différents modes de réalisation).

Dans un autre mode de réalisation de l'invention, il est proposé un terminal de paiement électronique tel que défini par la revendication 9.

Avantageusement, le terminal de paiement électronique comprend des moyens de mise en œuvre des étapes qu'il effectue dans le procédé de prévention tel que décrit précédemment, dans l'un quelconque de ses différents modes de réalisation.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un synoptique de la technique proposée selon un mode de réalisation particulier de l'invention ;
- la figure 2 présente un schéma de principe du procédé de l'invention illustrant le principe de rupture de boucle selon un mode de réalisation particulier;
- la figure 3 présente un premier exemple de structure simplifiée d'un terminal de paiement électronique selon un mode de réalisation particulier de l'invention ;
- la figure 4 présente un deuxième exemple de structure simplifiée d'un terminal de paiement électronique selon un mode de réalisation particulier de l'invention.

### 6. DESCRIPTION DÉTAILLÉE

Sur toutes les figures du présent document, les éléments et étapes identiques sont désignés par une même référence numérique.

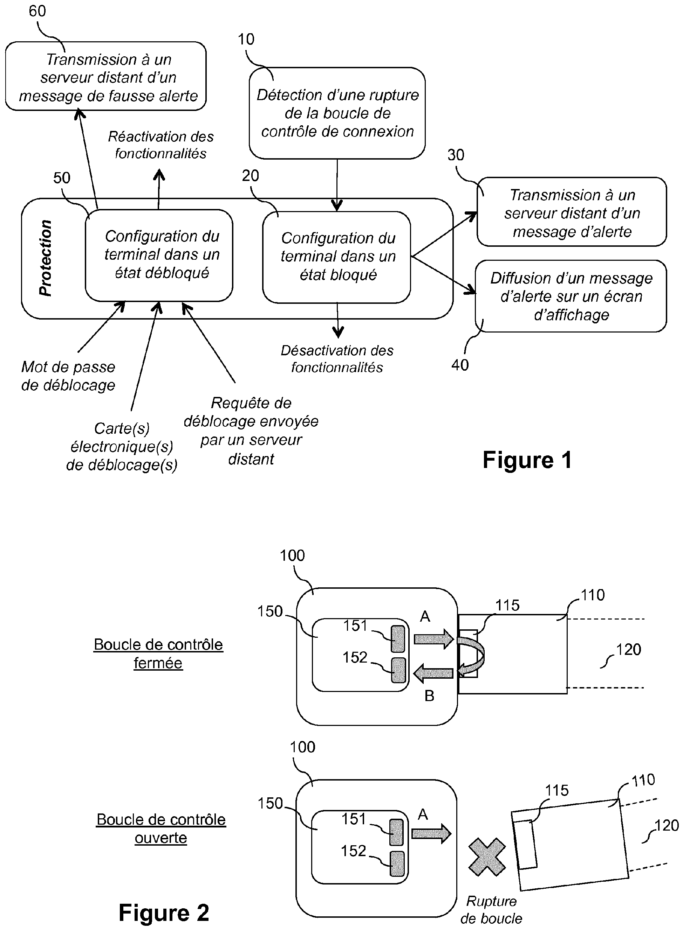

La **figure 1** présente un synoptique de la technique proposée selon un mode de réalisation particulier de l'invention. Il s'agit d'un procédé de détection d'une déconnexion du connecteur principal d'un terminal de paiement électronique filaire qui a pour effet de protéger ledit terminal contre la fraude et le piratage. Le procédé est effectué par le terminal de paiement lui-même, comme celui illustré sur la **figure 2** sous la référence numérique 100.

Prenons à titre d'exemple le cas d'un terminal de paiement 100 localisé dans un point de vente donné et destiné à réaliser des transactions financières avec un serveur distant d'un organisme bancaire (non illustré sur les figures). Cet organisme bancaire peut gérer un ou plusieurs comptes bancaires pour un ou plusieurs points de ventes. Le terminal de paiement 100 communique avec le serveur distant au moyen d'un câble de communication principal 120. Le terminal de paiement 100 est connecté au câble de communication 120 par l'intermédiaire d'un connecteur principal (ou « monoconnecteur ») 110, fixé à l'extrémité du câble de communication 120. Le connecteur principal 110 comprend des moyens de connexion 115, par exemple agencés sous forme de broches (ou PIN en anglais), permettant de réaliser la liaison mécanique et électrique entre le câble de communication 120 et le terminal de paiement 110. Le connecteur principal 110 permet de réaliser les interfaces entrée/sortie entre le terminal 110 et le câble de communication 120. Le câble de communication principal 120 comprend par exemple au moins une ligne de communication de données et au moins une ligne d'alimentation électrique.

Le procédé de détection selon l'invention comprend les étapes suivantes.

Dans une étape 10, le terminal de paiement 100 effectue une détection d'une rupture dans une boucle de contrôle de connexion entre l'unité centrale de contrôle 150, logée dans le terminal 100, et le connecteur principal 110.

Comme illustré sur les schémas de la figure 2, la boucle de contrôle démarre depuis l'unité centrale 150 du terminal, passe par le connecteur central 110, via les broches de connexion 115, et revient vers l'unité centrale 150.

Le terminal de paiement 100 est doté de moyens d'émission 151 (par exemple une source de signal électrique) configurés pour émettre un signal de test (A) en direction du connecteur principal 110 et de moyens de détection 152 (par exemple un détecteur de signal électrique) configurés pour détecter un signal de retour de boucle (B), provenant du connecteur principal 110. Les moyens d'émission 151 et de détection 152 sont pilotés par l'unité centrale 150. Côté connecteur principal 110, les broches de connexion 115 servent de moyens de réflexion du signal électrique pour réfléchir le signal de test A, le signal de retour de boucle B résultant de la réflexion du signal de test sur les broches de connexion 115.

La source 151 émet un signal électrique d'amplitude connue, en tant que signal de test A, en direction du connecteur principal 110. Si le connecteur principal 110 est connecté au terminal de paiement 100, alors le signal de test A arrivant sur les broches de connexion 115 du connecteur 110 se réfléchit sur celles-ci et retourne, sous forme d'un signal de retour de boucle B, en direction du détecteur 152. Le signal de retour de boucle B détecté par l'unité centrale 150 via le détecteur 152 signifie que la boucle de contrôle est fermée. Si le connecteur principal 110 est déconnecté du terminal de paiement 100, alors aucun signal de retour de boucle ne peut être détecté par le détecteur 152. Ainsi, en l'absence de signal de retour de boucle, l'unité centrale 150 détecte qu'il y a une rupture dans la boucle de contrôle de connexion et donc que le terminal 100 a été déconnecté de son connecteur principal 110.

Ainsi, l'invention repose sur la mise en œuvre d'un système de contrôle en boucle fermée pour s'assurer que le connecteur principal 110 n'a pas été déconnecté du terminal 100.

Le processus de vérification de rupture dans la boucle de contrôle de connexion est effectué soit de manière continue, soit de manière périodique (toutes les 10 secondes par exemple) afin d'économiser les ressources en énergie du terminal 100.

Dans une étape 20, en cas de détection d'une rupture dans la boucle de contrôle, le terminal de paiement 100 se configure dans un état bloqué, limitant des possibilités d'usage dudit terminal. Lorsque le terminal 100 se trouve dans l'état bloqué, il procède à un processus de désactivation des fonctionnalités suivantes :
- lecture d'une carte électronique de paiement ;
- mémorisation de données ;
- établissement d'une communication avec au moins un serveur distant;
- établissement d'une transaction ;
- saisie à l'aide du clavier numérique du terminal;
- restriction des messages affichés sur l'écran d'affichage du terminal ;
- etc.

Bien entendu, cette liste de fonctionnalités à désactiver n'est pas exhaustive. L'homme du métier est à même d'étendre cette liste à tout autre fonctionnalité qu'il estimera pertinente de désactiver en vue de limiter le risque de piratage du terminal de paiement électronique.

Il convient de noter que le terminal de paiement 100 selon l'invention est configuré de manière à ce que, par défaut, toute déconnexion du connecteur principal, sans autorisation préalable, est considérée comme une intrusion frauduleuse, inhibant ainsi les principales fonctions du terminal, afin d'éviter tout détournement à des fins de fraude.

Ainsi, si l'on souhaite procéder à une déconnexion du connecteur principal, par exemple pour réaliser une opération de maintenance du terminal, sans pour autant bloquer le terminal, il convient de désactiver au préalable le procédé de détection de déconnexion précitée, afin d'éviter le blocage non souhaité du terminal. Un processus consistant à émettre une requête de désactivation du processus de blocage du terminal selon l'invention, peut être prévu. Ce processus peut consister par exemple en un clique sur une icône ou un bouton prévu à cet effet (par exemple une icône *« Maintenance Operation* ») via l'écran d'affichage du terminal, de manière à faire apparaître une fenêtre de confirmation de désactivation du processus de blocage du terminal. La désactivation du processus de blocage du terminal peut être subordonnée à l'introduction d'un mot de passe ou l'insertion d'une carte électronique sécurisée dédiée associée à un mot de passe. Il s'agit d'un exemple purement illustratif. D'autres processus de désactivation du processus de blocage du terminal peuvent bien sûr être envisagés sans sortir du cadre de l'invention.

Le terminal 100, une fois basculé dans l'état bloqué, procède, dans une étape 30, à la transmission à un serveur distant d'un message alertant d'une déconnexion du connecteur principal 110 du terminal. Il peut s'agir par exemple d'un serveur distant d'un système à distance d'un parc de terminaux (TMS en anglais pour « Terminal Management System ») ou d'une passerelle de gestion de paiement à distance (organisme bancaire comme Axis par exemple). Ce message peut comprendre en outre un identifiant et une information de localisation du point de vente auquel est rattaché le terminal 100.

Le terminal 100, une fois basculé dans l'état bloqué, peut également procéder, dans une étape 40, à la diffusion d'un message alertant d'une déconnexion du connecteur principal 110 du terminal, directement sur l'écran d'affichage du terminal 100 et/ou sur un écran d'affichage distant indépendant du terminal 100, au niveau d'un poste par exemple de l'utilisateur pour le prévenir d'une tentative de vol ou de fraude du terminal 100. Dans cette dernière configuration, la diffusion sur un écran distant peut se faire par exemple au moyen d'une connexion sans-fil GSM.

Le procédé peut prévoir également, de manière optionnelle, une étape de génération d'une alarme vers un poste utilisateur pour prévenir ledit utilisateur d'une déconnexion du connecteur principal 110 du terminal.

Sur détection d'au moins un événement de déblocage suivant, à l'étape 50, le terminal 100 passe de l'état bloqué à l'état débloqué :
- introduction d'un code secret de déblocage via ledit terminal prédéterminé (prouvant que ledit terminal a été déconnecté par erreur du connecteur principal) ;
- introduction d'au moins une carte électronique de déblocage, chacune associée à un code secret de déblocage ;
- requête de déblocage envoyée à distance audit terminal depuis un serveur distant ;
- etc.

Ainsi, l'étape 50 du procédé permet de donner la possibilité à l'utilisateur du terminal de rebasculer le terminal 100 dans son état de fonctionnement normal (dit état débloqué), de manière sécurisé. Cette caractéristique est très pratique puisqu'elle offre la possibilité lorsqu'un retrait involontaire du connecteur principal 110 a été effectué de débloquer le terminal et de réactiver les fonctionnalités du terminal qui avaient été désactivées à l'étape 20. On peut prévoir d'exécuter cette étape de configuration dans l'état débloqué soit en local via le terminal 100 lui-même, soit à distance via un serveur distant.

Grâce à cette liste d'événements de déblocage, le procédé selon l'invention offre à l'utilisateur du terminal un système de sécurité multi-niveau, lui laissant le choix quant au niveau de sécurité qu'il souhaite imposer en fonction de ses besoins.

En pratique, la détection d'un événement de déblocage ne peut se faire qu'après avoir reconnecté le connecteur principal sur le terminal. En d'autres termes, le terminal doit avoir détecté que la boucle de connexion est à nouveau en configuration fermée (terminal connecté au connecteur principal et donc alimenté en énergie électrique).

A l'étape 60, le terminal 100 émet un message de fausse alerte à destination d'un serveur distant pour informer du fait que la déconnexion du connecteur 110 détectée au préalable n'est liée qu'à une erreur de manipulation et qu'il s'agit que d'une fausse alerte.

Enfin, il est à noter que le terminal de paiement 100 est alimenté en énergie par le connecteur principal lorsqu'il est dans un état de fonctionnement actif (c'est-à-dire allumé), et par une source d'alimentation interne (une pile par exemple) comprise dans le terminal 100 lorsqu'il est dans un état de fonctionnement inactif (c'est-à-dire éteint). Ainsi, que le terminal 100 soit actif ou inactif, il est toujours capable de détecter une déconnexion du connecteur principal 110, ce qui est particulièrement avantageux notamment de nuit où les terminaux sont généralement inactifs et où les vols de terminaux sont très fréquents.

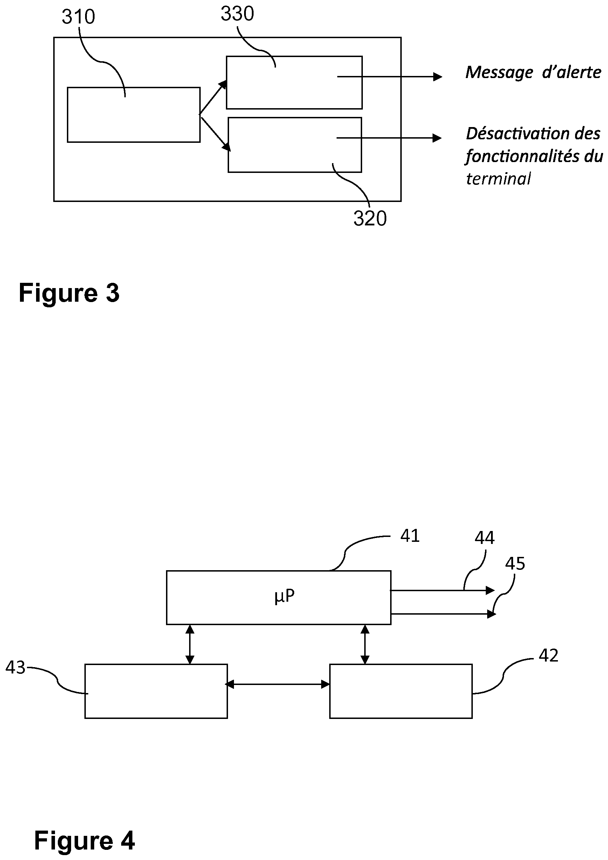

On décrit, en relation avec la **figure 3** un premier exemple de structure schématique d'un terminal de paiement électronique comprenant des moyens d'exécution du procédé décrit préalablement. Le terminal de paiement électronique comprend des moyens (par exemple sous la forme d'un ou plusieurs modules) de détection 310 d'une rupture dans la boucle de contrôle de connexion entre l'unité centrale de contrôle et le connecteur principal. Le terminal comprend en outre des moyens (par exemple sous la forme d'un ou plusieurs modules) de configuration 320 du terminal dans un état bloqué, lorsque les moyens de détection 310 délivrent un résultat positif (rupture dans la boucle de contrôle), ayant pour conséquence de désactiver les fonctionnalités du terminal. Le terminal comprend en outre des moyens (par exemple sous la forme d'un ou plusieurs modules) de génération 330 d'un message d'alerte de déconnexion du connecteur principal, lorsque les moyens de détection 310 délivrent un résultat positif.

On décrit, en relation avec la **figure 4** un exemple de structure schématique d'un dispositif mettant en œuvre le procédé de prévention selon l'invention (par exemple le mode de réalisation particulier décrit ci-dessus en relation avec les figures 1 et 2). Ce dispositif comprend une mémoire vive 43 (par exemple une mémoire RAM), une unité de traitement 41, équipée par exemple d'un processeur ou microprocesseur µP, et pilotée par un programme d'ordinateur stocké dans une mémoire morte 42 (par exemple une mémoire ROM ou un disque dur). A l'initialisation, les instructions de code du programme d'ordinateur sont par exemple chargées dans la mémoire vive 43 avant d'être exécutées par le processeur de l'unité de traitement 41. Sur détection d'une rupture de boucle de contrôle de connexion (détection d'une absence de signal de retour de boucle), l'unité de traitement 41 configure le terminal dans un état bloqué, limitant des possibilités d'usage du terminal et génère en sortie un message d'alerte 44 à destination d'un serveur distant et/ou sur l'écran d'affichage du terminal, selon les instructions du programme 42. Sur détection d'un événement de déblocage de type sécurisé, l'unité de traitement 41 configure le terminal dans un état débloqué, réactivant les fonctionnalités du terminal et génère en sortie un message de fausse d'alerte 45 à destination d'un serveur distant et/ou sur l'écran d'affichage du terminal, selon les instructions du programme 42.

Cette figure 4 illustre seulement une manière particulière, parmi plusieurs possibles, de réaliser les différents algorithmes détaillés ci-dessus, en relation avec les figures 1 et 2. En effet, la technique de l'invention se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de détection d'une déconnexion d'un connecteur principal (110) externe d'un terminal de paiement électronique (100), comprenant les étapes suivantes :
- détection (10) d'une rupture dans une boucle de contrôle de connexion entre une unité centrale de contrôle, logée dans ledit terminal, et le connecteur principal, ladite étape de détection d'une rupture de boucle comprenant une étape d'émission d'un signal de test vers le connecteur principal et une étape de détection d'un signal de retour de boucle ;
- en cas de détection négative du signal de retour de boucle, configuration (20) dudit terminal dans un état bloqué consistant en une désactivation d'au moins une fonctionnalité dudit terminal ;
le procédé étant **caractérisé en ce qu'**il comprend en cas de détection positive d'une rupture, les étape suivantes pour détecter une déconnexion involontaire:
- détermination d'une durée de rupture dans la boucle de contrôle de connexion ;
- vérification que ladite durée de rupture est inférieure à une durée prédéterminée.

2. Procédé selon la revendication 1, comprenant, lorsque ledit terminal se trouve dans l'état bloqué, une étape de transmission (30), à au moins un serveur distant, d'un message informant qu'une déconnexion du connecteur principal dudit terminal a été détectée.

3. Procédé selon l'une quelconque des revendications 1 et 2, comprenant, en cas de détection positive d'une rupture, une étape de diffusion (40) d'un message informant qu'une déconnexion du connecteur principal dudit terminal a été détectée.

4. Procédé selon l'une quelconque des revendications 1 à 3, comprenant, lorsque ledit terminal se trouve dans l'état bloqué, une étape de désactivation des fonctionnalités dudit terminal, lesdites fonctionnalités appartenant au groupe comprenant :
- lecture d'une carte électronique de paiement ;
- mémorisation de données ;
- établissement d'une communication avec au moins un serveur distant ;
- établissement d'une transaction ;
- saisie à l'aide d'un pavé numérique du terminal ;
- restriction des messages affichés sur un écran d'affichage du terminal.

5. Procédé selon l'une quelconque des revendications 1 à 4, dans lequel l'étape de détection (10) d'une rupture de boucle de contrôle de connexion est effectuée :
- lorsque ledit terminal est dans un état de fonctionnement actif, ledit terminal étant alimenté en énergie par le connecteur principal, ou
- lorsque ledit terminal est dans un état de fonctionnement inactif, ledit terminal étant alimenté en énergie par une source d'alimentation interne comprise dans ledit terminal.

6. Procédé selon l'une quelconque des revendications 1 à 5, comprenant en outre, lorsque ledit terminal se trouve dans l'état bloqué, une étape de configuration (50) dudit terminal dans un état débloqué, sur détection d'au moins l'un des événements de déblocage suivants :
- introduction, via ledit terminal, d'un code secret de déblocage prédéterminé ;
- introduction, via ledit terminal, d'au moins une carte électronique de déblocage, chacune associée à un code secret de déblocage ;
- requête de déblocage envoyée à distance audit terminal depuis un serveur distant.

7. Produit programme d'ordinateur, comprenant des instructions de code de programme pour la mise en œuvre du procédé selon au moins une des revendications 1 à 6, lorsque ledit programme est exécuté sur un ordinateur.

8. Médium de stockage lisible par ordinateur et non transitoire, stockant un produit programme d'ordinateur selon la revendication 7.

9. Terminal de paiement électronique (100) auquel est connecté à un connecteur principal (110) externe audit terminal, ledit terminal comprenant :
- des moyens de détection (310) d'une rupture dans une boucle de contrôle de connexion entre une unité centrale de contrôle, logée dans ledit terminal, et le connecteur principal, au moyen d'un signal de test envoyé vers le connecteur principal et d'un signal de retour de boucle détecté par l'unité centrale de contrôle ;
- en cas de détection négative du signal de retour de boucle ;
- des moyens de configuration (320) dudit terminal dans un état bloqué consistant en une désactivation d'au moins une fonctionnalité dudit terminal, activés lorsque les moyens de détection ne détectent pas ledit signal de retour de boucle ;
ledit terminal étant **caractérisé en ce qu'**il comprend pour détecter une déconnexion involontaire: comprend
en cas de détection positive d'une rupture, des moyens de détermination d'une durée de rupture dans la boucle de contrôle de connexion d'une part et des moyens de vérification que ladite durée de rupture est inférieure à une durée prédéterminée d'autre part, activés lorsque les moyens de détection détectent ledit signal de retour de boucle.

## Patentansprüche

1. Verfahren zum Erfassen einer Unterbrechung eines externen Hauptanschlusses (110) eines elektronischen Zahlungsterminals (100), umfassend die folgenden Schritte:
- Erfassen (10) einer Unterbrechung in einer Regelschleife des Anschlusses zwischen einer zentralen Steuereinheit, die in dem Terminal untergebracht ist, und dem Hauptanschluss, wobei der Schritt des Erfassens einer Schleifenunterbrechung einen Schritt des Sendens eins Testsignals an den Hauptanschluss und einen Schritt des Erfassens eines Schleifenrückkopplungssignals aufweist,
- wird das Schleifenrückkopplungssignal nicht erfasst, Konfigurieren (20) des Terminals in einem blockierten Zustand, der in einem Deaktivieren mindestens einer Funktionalität des Terminals besteht,
wobei das Verfahren **dadurch gekennzeichnet ist, dass** es bei Erfassen einer Unterbrechung die folgenden Schritte aufweist, um eine unbeabsichtigte Unterbrechung zu erfassen:
- Bestimmen einer Unterbrechungsdauer in der Regelschleife des Anschlusses,
- Überprüfen, dass die Unterbrechungsdauer kürzer als eine vorbestimmte Dauer ist.

2. Verfahren nach Anspruch 1, umfassend, wenn sich das Terminal in dem blockierten Zustand befindet, eines Schritts des Sendes (30) an mindestens einen Remote-Server einer Nachricht, die darüber informiert, dass eine Unterbrechung des Hauptanschlusses des Terminals erfasst worden ist.

3. Verfahren nach einem der Ansprüche 1 und 2, umfassend, wenn eine Unterbrechung erfasst worden ist, einen Schritt des Versendens (40) einer Nachricht, die darüber informiert, dass eine Unterbrechung des Hauptanschlusses des Terminals erfasst worden ist.

4. Verfahren nach einem der Ansprüche 1 bis 3, umfassend, wenn sich das Terminal in dem blockierten Zustand befindet, einen Schritt des Deaktivierens der Funktionalitäten des Terminals, wobei die Funktionalitäten zu der Gruppe gehören, umfassend:
- Lesen einer elektronischen Zahlungskarte,
- Speichern von Daten,
- Aufbauen einer Kommunikation mit mindestens einem Remote-Server,
- Einrichten einer Transaktion,
- Eingeben mit Hilfe von einem numerischen Tastenfeld des Terminals,
- Beschränken der Nachrichten, die auf einem Anzeigebildschirm des Terminals angezeigt werden.

5. Verfahren nach einem der Ansprüche 1 bis 4, wobei der Schritt des Erfassens (10) einer Unterbrechung der Regelschleife des Anschlusses durchgeführt wird:
- wenn sich das Terminal in einem aktiven Betriebszustand befindet, wobei das Terminal durch den Hauptanschluss mit Energie versorgt wird, oder,
- wenn sich das Terminal in einem inaktiven Betriebszustand befindet, wobei das Terminal durch eine interne Stromquelle mit Energie versorgt wird, die in dem Terminal enthalten ist.

6. Verfahren nach einem der Ansprüche 1 bis 5, ferner umfassend, wenn sich das Terminal in dem blockierten Zustand befindet, einen Schritt des Konfigurierens (50) des Terminals in einen entsperrten Zustand bei Erfassen von mindestens einem der folgenden Entriegelungsereignisse:
- Eingeben eines vorbestimmten geheimen Entsperrcodes über das Terminal,
- Einführen von mindestens einer elektronischen Entsperrkarte über das Terminal, wobei jede einem geheimen Entsperrcode zugeordnet ist,
- Entsperrungsanfrage, die von einem Remote-Server per Fernzugriff an das Terminal gesendet wird.

7. Computerprogrammprodukt, das Programmcodebefehle für das Umsetzen des Verfahrens nach mindestens einem der Ansprüche 1 bis 6 aufweist, wenn das Programm auf einem Rechner ausgeführt wird.

8. Nicht transientes computerlesbares Speichermedium, das ein Computerprogrammprodukt nach Anspruch 7 speichert.

9. Elektronischen Zahlungsterminal (100), an das ein externer Hauptanschluss (110) angeschlossen ist, wobei das Terminal aufweist:
- Mittel zum Erfassen (310) einer Unterbrechung in einer Regelschleife des Anschlusses zwischen einer zentralen Steuereinheit, die in dem Terminal untergebracht ist, und dem Hauptanschluss, mittels eines Testsignals, das an den Hauptanschluss gesendet wird, und eines Schleifenrückkopplungssignals, das von der Steuereinheit erfasst wird,
- wenn das Schleifenrückkopplungssignal nicht erfasst wird,
- Mittel zum Konfigurieren (320) des Terminals in einen blockierten Zustand, der in einem Deaktivieren mindestens einer Funktionalität des Terminals besteht, die aktiviert werden, wenn die Mittel zum Erfassen das Schleifenrückkopplungssignal nicht erfassen, wobei das Terminal **dadurch gekennzeichnet ist, dass** es zum Erfassen von einer unbeabsichtigten Unterbrechung aufweist:
bei Erfassen einer Unterbrechung einerseits Mittel zum Bestimmen einer Unterbrechungsdauer in der Regelschleife des Anschlusses und andererseits Mittel zum Überprüfen, dass die Unterbrechungsdauer kürzer als eine vorbestimmte Dauer ist, die aktiviert werden, wenn die Mittel zum Erfassen das Schleifenrückkopplungssignal erfassen.

## Claims

1. Method for detecting a disconnection of a main connector (110) of an electronic payment terminal (100), comprising the following steps:
- detecting (10) a break in a connection control loop between a central control unit, housed in said terminal, and the main connector, said step of detecting a break comprising a step of sending a test signal to the main connector and a step of detecting a loop feedback signal;
- in the event of a negative detection of the loop feedback signal, configuring (20) said terminal in a blocked state,
the method being **characterized in that** it comprises, in the event of positive detection of a break, the following steps for detecting an involuntary disconnection:
- determining a duration of break in the connection control loop; and
- verifying that said duration of break is below a predetermined duration.

2. Method according to claim 1, comprising, when said terminal is in the blocked state, a step (30) of transmission, to at least one remote server, of a message providing information that a disconnection of the main connector from said terminal has been detected.

3. Method according to any one of claims 1 to 2, comprising a step, should there be a positive detection of a break, of delivering (40) a message providing information that a disconnection of the main connector of said terminal has been detected.

4. Method according to any one of the claims 1 to 3, comprising a step, when said terminal is in the blocked state, of deactivating functions of said terminal, said functions belonging to the group comprising:
- reading an electronic payment card;
- storing data;
- setting up a communication with at least one remote server;
- setting up a transaction;
- making entries by means of a digital pad of the terminal;
- restricting messages displayed on a display screen of the terminal.

5. Method according to any one of claims 1 to 4, wherein the step (10) of detecting a break in the connection control loop is performed:
- when said terminal is in an active operating state, said terminal being supplied with energy by the main connector, or
- when said terminal is in an inactive operating state, said terminal being supplied with energy by an internal power source included in said terminal.

6. Method according to any one of claims 1 to 5, comprising a step, when said terminal is in the blocked state, of configuring (50) said terminal in a released state upon detection of at least one of the following releasing events:
- introduction via said terminal of a predetermined secret releasing code (proving that said terminal has been disconnected from the main connector by mistake);
- insertion via said terminal of at least one electronic releasing card, each associated with a secret releasing code;
- request for releasing sent remotely to said terminal from a remote server.

7. Computer program product comprising program code instructions to implement the method according to any one of the claims 1 to 6, when said program is executed on a computer.

8. Computer-readable and non-transient storage medium, storing a computer program product according to claim 7.

9. Electronic payment terminal (100) to which there is connected a main connector (110), comprising:
- means (310) for detecting a break in a connection control loop between a central control unit, housed in said terminal, and the main connector by means of a test signal sent to the main connector and a loop feedback signal detected by the central unit;
- in the event of a negative detection of the loop feedback signal, means (320) for configuring said terminal in a blocked state, activated when the detection means does not detect the loop feedback signal,
the terminal being **characterized in that** it comprises, for detecting an involuntary disconnection:
in the event of positive detection of a break, means for determining a duration of break in the connection control loop on the one hand and means for verifying that said duration of break is below a predetermined duration on the other hand, activated when said detecting means detect said loop feedback signal.
